# EUROPEAN PATENT SPECIFICATION

(11) **EP 1 419 914 B1**
(45) Date of publication and mention of the grant of the patent: **04.04.2007**
(21) Application number: 03380228.1
(22) Date of filing: 10.10.2003
(51) Int. Cl.: B60J 1/17, B60J 5/04, E05F 15/16, E05B 65/12

(54) **Power window device fitted on the lock of the motor vehicle door**
Fensterheberantriebsvorrichtung, befestigt an der KFZ-Türverriegelung
Dispositif d'entraînement de lève-vitre fixé à la serrure de la porte du véhicule

(30) Priority: 14.11.2002 ES 200202611
(43) Date of publication of application: 19.05.2004
(73) Proprietor: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(56) References cited:
- EP-A- 0 703 107
- WO-A-01/45975
- DE-A- 3 111 633
- DE-A- 10 057 352
- US-A- 4 716 681
- US-B1- 6 412 223

## Description

The present patent application relates, as to a POWER WINDOW DEVICE FITTED ON THE MOTOR VEHICLE DOOR" which novel manufacturing, conformation and design features fulfil the purpose to which it has been specifically conceived, with a maximum safety and effectiveness.

The invention is applied to a specific type of power window devices in motor vehicles adapted to be mounted directly on the gearmotor assembly in the lock of the door. A power window device of this type is described in the Spanish Patent Application P200202217 filed in the name of the same applicant. Said power window device essentially comprises a first guiding and sliding assembly fitted into the doorframe of the motor vehicle door and a second guiding and sliding assembly provided in the rail of the power window device, said assemblies being provided with sliding members fixed to the window pane. There are also included driving means for said guiding and sliding assemblies and the whole assembly is mounted, as stated before, in the motor vehicle lock with the rail secured thereto.

In this patent the variables of the design in said power window assembly were set forth and they were depending on various parameters as the distance between points of contact of the sliding member in the rail; the distance from the upper edge of the window pane to the fastening edge of the sliding member; the distance from an end of the rail to the points of contact; the height from the lower portion of the motor vehicle door to the belt line; the window height, etc.

By determining the relationship between the previous variables it was allowed to overcome the drawback of the conventional power window devices secured to the motor vehicle lock arisen from instability of the assembly in use. This instability was produced since fastening of the window pane in the sliding member and guiding thereof had certain looseness which negatively influenced on the system operation, which were amplified by the action of the large cantilever of the window pane (the power window device is mounted in the lock, in a side end of the door).

Once said variables were defined in the main patent, it has been found that the appropriate and more advantageous structural configuration is the one herein described according to the present invention.

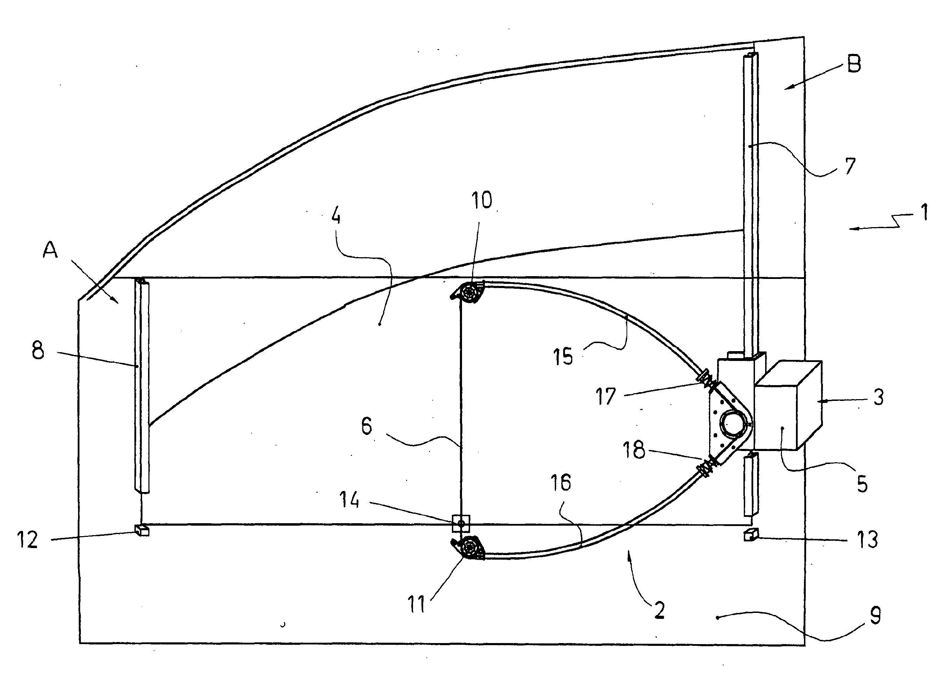

Document PCT WO 01/45975 claims a door module for vehicles, whose figure 8 shows glass (13) which slides through rails (65A), (65B) joint by profiles (61) and bars (62A-62B) and an engine (20) placed in the middle part of the door (14).

Also in patent DE 10057352 which represents the most relevant prior art document a "Window device" can be seen fixed to the window door by means of a deck (2) the glass' (5) is guided by two rails or pieces of guide rails (8-10) and two slides (7-9).

In patent DE 4006372 and figure 1, two rails (700) appear, placed at the outer ends of the door which guide a glass (100) which goes up and down through a scissors device (500) driven with an electro-engine (400) placed in the middle part of the door.

Finally, in patent DE 44323890 there is a "Window device" consisting of rails (6) immobilized to the door upper frame (7-8-13).

The present invention provides a new improved power window device fitted on the motor vehicle door having an extremely simple construction and a very effective operation as it achieves a high dynamic stability.

The power window device of the invention essentially comprises guiding and sliding means and driving means for the motor vehicle window pane which, as it has been previously stated, are mounted in the lock of the motor vehicle. Said driving means of the window pane include an electric motor and a gearmotor assembly acting on a driving cable.

The main feature of the invention is that said guiding and sliding means for the window pane comprises respective rails directly mounted on opposed edges of the inner panel of the motor vehicle door. This configuration allows to remove the rail in the conventional power window devices thus simplifying the assembly.

Preferably, the power window device of the invention only includes two pulleys for a single driving cable. This feature involves a further simplification of the power window device of the present invention with regard to the double-rail power window devices of the prior art which use four pulleys. The use of two pulleys is due to the fact that only a single driving cable is present. In addition, according to the invention, said two pulleys are directly fixed to the inner panel of the door through their own shaft.

Many advantages are achieved and they are associated to a large extent with a drastic cost reduction. The extreme mechanical simplification of the assembly by reducing the number of parts in the power window device allows to reduce the final cost thereof. Further, with said smaller number of parts, it is also possible to reduce friction produced in operation and consequently noise is also reduced. On the other hand, the assembly of the power window device that is herein described is considerably simpler and quicker than that of the known power window devices.

These advantages and features of the power window device of the present invention which have been previously set out will be clearer from the detailed description of a preferred embodiment thereof which will be given hereinafter by way of a non limitative example, with reference to the drawing that is herein enclosed, wherein a side elevational view of a motor vehicle door provided with a preferred embodiment of a power window device according to the invention is shown.

A detailed list of the various parts cited in the present patent application is given below::
(1) motor vehicle door;
(2) power window device;
(3) lock;
(4) window pane;
(5) window pane driving means;
(6) driving cable;
(7) rail;
(8) rail;
(9) inner panel of the door;
(10) pulley;
(11) pulley;
(12) end of travel lower stop;
(13) end of travel lower stop;
(14) window pane support;
(15) driving cable sheath;
(16) driving cable sheath;
(17) spring;
(18) spring;
(A, B) door pillars.

In the figure which is herein enclosed, the door of a motor vehicle is shown indicated at (1) which is provided with an improved power window device (2) mounted in the lock (3) thereof according to the invention.

The power window device (2) comprises guiding and sliding means for the window pane (4) of the door (1) and driving means (5) for said window pane (4) which are mounted in said lock (3). These driving means (5) for the window pane (4) include an electric motor and a gearmotor assembly (not shown) acting on a driving cable (6).

Said guiding and sliding means for the window pane (4) comprises respective U-shaped cross-section rails (7, 8) through which said window pane (4) is allowed to slide. These rails (7, 8) are directly mounted in opposed edges of the inner panel (9) of the motor vehicle door (1), that is to say, in the pillar (A) and in the pillar (B) of the door, respectively. The driving cable (6) is a single cable and it is only wound in its travel around two pulleys (10, 11) which are directly attached to the inner panel (9) of the door (1) through their own shaft. In said panel (9) of the door (1), the corresponding end of travel inner stops (12, 13) are fixed.

As it can be seen, the driving cable (6) also includes a support (14) secured to the window pane (4) so that the movement of said driving cable (6) in either direction causes the rising or lowering action of the window pane (4) by actuating said driving means (5) mounted in the lock (3).

The upper and lower sections of the driving cable (6) are placed within respective sheaths (15, 16) thus ensuring tightening thereof by means of springs (17, 18). The assembly of the power window device (2) may be greatly facilitated by releasing the cable (6) by any appropriate means which allows prestressing said springs (17, 18) during assembly. Once the assembly is assembled, the operator removes said means acting on the said springs so that they will be expanded back tightening the cable (6).

## Claims

1. Power window device fitted on a motor vehicle door, said power window device comprising guiding and sliding means for a motor vehicle window pane (4) and driving means (5) for said window pane, the driving means (5) include an electric motor and a gearmotor assembly acting on a driving cable (6) for said window pane, the driving cable (6) includes a support (14) secured to the window pane (4) for rising and lowering the window pane (4), the driving means (5) are mounted in a lock (3) of the motor vehicle door (1), **characterized in that**
said guiding and sliding means for the window pane comprise respective rails (7,8), the first rail (7) is mounted in a first door pillar (B) and mounted inside an element of the lock (3), whereas the second rail (8) is mounted in a second door pillar (A), the rails (7,8) being directly mounted on opposed edges of the inner panel (9) of the motor vehicle door (1).

2. The power window device according to claim 1, **characterized in that** the driving cable (6) is a single cable which is only wound in its travel around two pulleys (10, 11), said two pulleys (10, 11) are directly attached to the inner panel (9) of the motor vehicle door (1), said cable (6) at its upper and lower sections is placed within the respective sheaths (15, 16), thus ensuring tightening and loosening thereof by means of springs (17, 18), said springs being placed in the ends of the sheaths (15, 16).

3. THE POWER WINDOW DEVICE according to claim 2, **characterized in that** said pulleys (10, 11) are directly mounted on the inner panel (9) of the door (1) through their own shaft.

## Patentansprüche

1. Fensterhebevorrichtung, die an einer Kraftfahrzeugtür montiert ist, wobei besagte Fensterhebevorrichtung Führungs- und Gleitmittel für eine Kraftfahrzeugfensterscheibe (4) umfasst sowie Antriebsmittel (5) für diese Fensterscheibe, bestehend aus einer Elektromotor- und einer Getriebemotorbaugruppe, die mit einem Antriebskabel (6) für die Fensterscheibe zusammenwirken, wobei das Antriebskabel (6) eine Halterung (14) besitzt, die an der Fensterscheibe (4) befestigt ist und zum Heben und Senken der Fensterscheibe (4) dient, und wobei die Antriebsmittel (5) in einem Schloss (3) der Kraftfahrzeugtür (1) untergebracht sind, **dadurch gekennzeichnet, dass**
die besagten Führungs- und Gleitmittel für die Fensterscheibe entsprechende Schienen (7,8) umfassen, von denen die erste Schiene (7) in einer ersten Türsäule (B) innerhalb eines Elements des Schlosses (3) untergebracht ist, während die zweite Schiene (8) in einer zweiten Türsäule (A) montiert ist, wobei sich die Schienen (7,8) an direkt gegenüberliegenden Kanten der inneren Türverkleidung (9) der Kraftfahrzeugtür (1) befinden.

2. Fensterhebevorrichtung nach Anspruch 1, **dadurch gekennzeichnet, dass** das Antriebskabel (6) ein Einzelkabel ist, das in seinem Verlauf nur über zwei Rollen (10,11) gewickelt ist, wobei diese Rollen (10,11) direkt mit der Innenverkleidung (9) der Kraftfahrzeugtür (2) verbunden sind und wobei das Kabel (6) an seinem oberen und unteren Abschnitt in entsprechenden Umhüllungen (15, 16) untergebracht ist, sodass das Spannen und Lösen durch Federn (17, 18), die an den Enden der Kabelumhüllungen (15,16) untergebracht sind, gewährleistet ist.

3. Fensterhebevorrichtung nach Anspruch 2, **dadurch gekennzeichnet, dass** die Rollen (10, 11) mittels ihres eigenen Schaftes direkt an der Innenverkleidung (9) der Tür (1) angebracht sind.

## Revendications

1. Dispositif électrique pour vitre fixé à la porte d'un véhicule à moteur, ce dispositif électrique pour vitre comprenant des moyens de guidage et de coulissement pour la glace de la vitre d'un véhicule à moteur (4) et des moyens d'actionnement (5) pour cette glace de la vitre, les moyens d'actionnement comprenant un moteur électrique et un assemblage de moteur à engrenages agissant sur le câble d'actionnement (6) de cette glace de la vitre, le câble d'actionnement (6) comprenant un support (14) attaché à la glace de la vitre (4) pour monter et baisser la glace de la vitre (4), les moyens d'actionnement (5) étant montés sur une serrure (13) de la porte d'un véhicule à moteur (1), **caractérisé par le fait que** ces moyens de guidage et de coulissement pour la glace de la vitre comprennent respectivement des guides (7, 8 ), le premier guide (7) est monté sur le premier montant de la porte (B) et monté à l'intérieur d'un élément de la serrure (3), alors que le second guide (8) est monté sur un deuxième montant de la porte (A), les rails (7, 8) étant directement montés sur des extrémités opposées du panneau intérieur (9) de la porte d'un véhicule à moteur (1).

2. Dispositif électrique pour vitre conformément à la revendication 1, **caractérisé par le fait que** le câble d'actionnement (6) est un câble unique qui s'enroule uniquement lors de son parcours autour de deux poulies (10, 11), ces deux poulies (10, 11) sont directement fixées au panneau intérieur (9) de la porte d'un véhicule à moteur (1), ce câble (6) au niveau de ses sections supérieure et inférieure est placé dans les gaines respectives (15, 16), ce qui garantit qu'il se tend et se détend au moyen de ressorts (17, 18), ces ressorts étant placés aux extrémités des gaines (15, 16).

3. Dispositif électrique pour vitre conformément à la revendication 2, **caractérisé par le fait que** ces poulies (10, 11) sont directement montées sur le panneau intérieur (9) de la porte (1) à travers leur propre tige.
